## Europäisches Patentamt

## European Patent Office

## Office européen des brevets

(19)

(11) Veröffentlichungsnummer: **0 222 963**
**B1**

(12) **EUROPÄISCHE PATENTSCHRIFT**

(45) Veröffentlichungstag der Patentschrift:
**10.01.90**

(21) Anmeldenummer: **85810553.9**

(22) Anmeldetag: **20.11.85**

(51) Int. Cl.⁴: **F24F 12/00, F24D 11/02**

(54) Verfahren und Anlage zur Wärmerückgewinnung.

(43) Veröffentlichungstag der Anmeldung:
**27.05.87 Patentblatt 87/22**

(45) Bekanntmachung des Hinweises auf die Patenterteilung:
**10.01.90 Patentblatt 90/2**

(84) Benannte Vertragsstaaten:
**AT CH DE FR GB IT LI NL SE**

(56) Entgegenhaltungen:
**CH-A- 584 870**
**FR-A- 2 204 786**

(73) Patentinhaber: **Jäggi AG Bern, Wangenstrasse 102,
CH-3018 Bern(CH)**

(72) Erfinder: **Zeller, Marin, Schlüchtern 18,
CH-3150 Schwarzenburg(CH)**

(74) Vertreter: **Steiner, Martin et al, c/o AMMANN
PATENTANWÄLTE AG BERN Schwarztorstrasse 31,
CH-3001 Bern(CH)**

## Beschreibung

Die vorliegende Erfindung betrifft ein Verfahren zur Wärmerückgewinnung gemäss Oberbegriff des Anspruchs 1. Verfahren bzw. Anlagen, die entsprechend arbeiten, sind bekannt, beispielsweise aus der CH-PS 584 870. Es ist hierbei auch bekannt, im Übertragungskreislauf einen By-pass mit Regelventil und einen Zusatzerhitzer ebenfalls mit Regelventil vorzusehen, und zwar um Reif- oder Eisbildung in den Wärmetauschern zu vermeiden. Abgesehen von dieser Regelung, die nur gestützt auf Parameter des einen oder beider Medienströme erfolgt, ist keine Regelung vorgesehen. Wie noch gezeigt werden wird, lassen sich aber unter diesen Umständen keine optimalen Bedingungen zur Wärmerückgewinnung erzielen.

Es ist auch bekannt, in einer Wärmerückgewinnungsanlage mit Wärmepumpe und mit getrenntem Kühlkreislauf und Heizkreislauf, in beiden Kreisläufen die Durchflussmenge des Wärmeträgers und ausserdem die Leistung der Wärmepumpe zu regeln (FR-A 2 204 786). Die Steuerung erfolgt ausschliesslich auf Grund erfasster Temperaturen.

Der vorliegenden Erfindung liegt die Aufgabe zugrunde, die Wärmerückgewinnung bzw. den Wirkungsgrad von Wärmerückgewinnungsanlagen der oben beschriebenen ersten Art erheblich zu steigern. Die Lösung ist im Kennzeichen des Anspruchs 1 angegeben. Vorzugsweise wird im Übertragungskreislauf die zurückgewonnene thermische Leistung durch Messung der Temperaturdifferenz zwischen Vorlauf und Rücklauf und der Wärmeträgermenge erfasst. Dabei kann durch periodische, versuchsweise Erhöhung oder Reduktion der Wärmeträgermenge geprüft werden, welche Änderung zu einer Erhöhung des Wirkungsgrades führt.

Die Erfindung betrifft auch eine Anlage zur Wärmerückgewinnung gemäss obenstehendem Verfahren, welche in Anspruch 6 umschrieben ist.

Die Erfindung wird nun anhand eines in der Zeichnung dargestellten Ausführungsbeispiels näher erläutert.

Figur 1 ist ein Blockschema der erfindungsgemässen Anlage zur Wärmerückgewinnung im Falle einer Klimaanlage,

Figur 2 ist ein Diagramm zur Darstellung der Wärmerückgewinnung in Funktion einzelner Parameter,

Figur 3 zeigt Diagramme I, II und III, die dem Vergleich des Wirkungsgrades bestimmter Arten der Wärmerückgewinnung darstellen und

Figur 4 ist ein Diagramm zur Darstellung des Regelvorgangs.

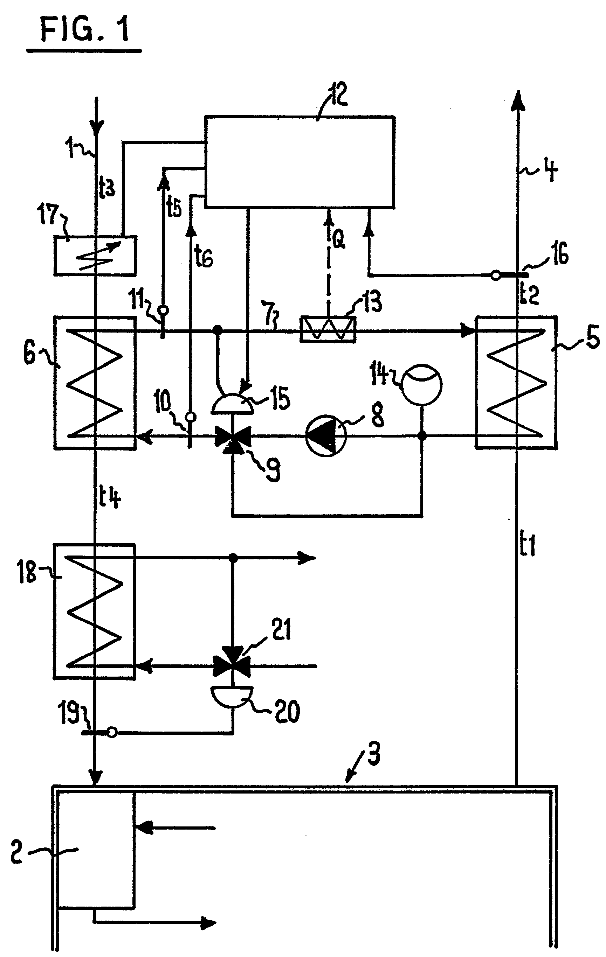

Figur 1 zeigt schematisch die erfindungswesentlichen Teile einer Klimaanlage. Zuluft wird über einen schematisch angedeuteten Kanal 1 dem Klimagerät 2 im Gebäude 3 zugeführt. Die Abluft wird durch einen schematisch angedeuteten Kanal 4 ins Freie geführt. In vielen Fällen, insbesondere bei der Installation von Klimaanlagen in bestehenden Gebäuden, ist es nicht möglich, die beiden Luftströme an einer Stelle zusammenzuführen und dort eine direkte Wärmerückgewinnung in einem einzigen von den beiden Strömen durchflossenen Wärmetauscher vorzunehmen. In solchen Fällen muss die Wärmerückgewinnung zwischen zwei getrennten Wärmetauschern über einen Sekundärkreis oder Uebertragungskreis erfolgen. Figur 1 zeigt einen ersten Wärmetauscher 5, der von der Abluft durchströmt wird sowie einen zweiten Wärmetauscher 6 der von der Zuluft durchströmt wird. Der Uebertragungskreis 7 übernimmt den Wärmetransport aus der normalerweise wärmeren Abluft in die normalerweise kühlere Zuluft, indem der Wärmeträger im Kreislauf 7 im Wärmetauscher 5 erwärmt und im Wärmetauscher 6 abgekühlt wird. Der Wärmeträger wird durch eine Pumpe 8 umgewälzt, und ein Regelventil 9 dient der Regelung der Wärmeträgermenge in später beschriebener Weise. Thermometer 10 und 11 dienen der Messung der Wärmeträgertemperatur im Vorlauf bzw. Rücklauf, und die entsprechenden Messsignale gelangen an den Regler 12. Im weiteren ist ein Durchlaufmesser oder Mengenmesser 13 vorgesehen, welcher die durchfliessende Wärmeträgermenge Q erfasst und ein ensprechendes Messignal an den Regler 12 übermittelt. Im Uebertragungskreislauf ist schliesslich ein Expansionsgefäss 14 vorgesehen. Der Regler 12 ist mit einem Stellorgan 15 für das Ventil 9 verbunden.

Ein Thermometer 16 erfasst die Temperatur der aus dem Wärmetauscher 5 austretenden Abluft und übermittelt ein entsprechendes Messsignal an den Regler 12. Ein weiterer Ausgang des Reglers 12 ist mit einem elektrischen Vorwärmer 17 verbunden, welcher unter bestimmten Umständen dazu dient, die Zuluft vorzuwärmen.

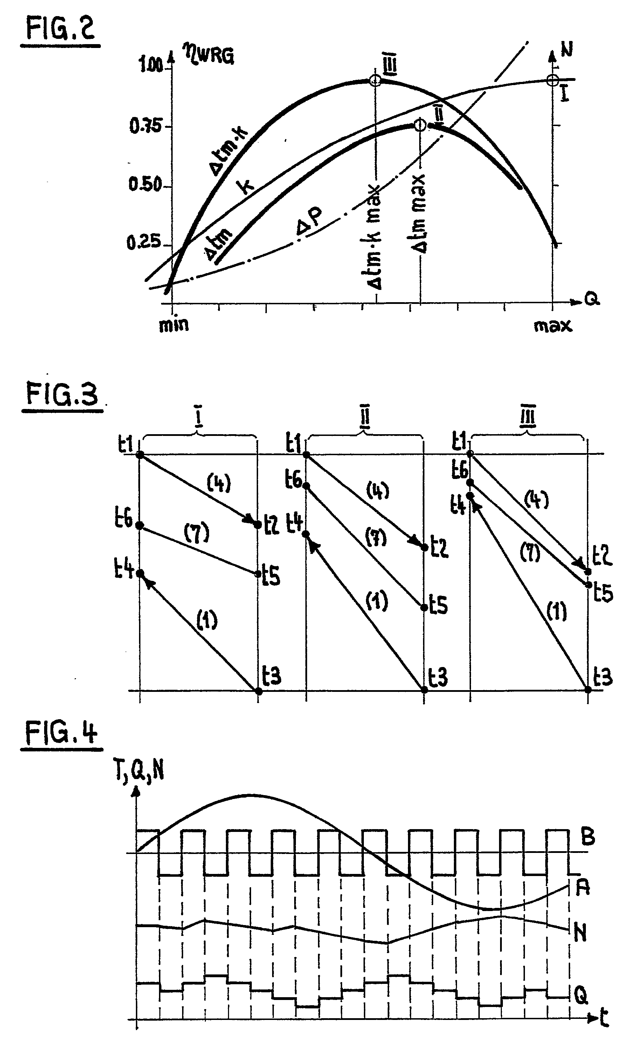

Im Zuluftkanal befindet sich ein weiterer Wärmetauscher 18, welcher der weiteren Erwärmung der Zuluft mittels einer Warmwasserheizung dient. Die Regelung dieser Heizung erfolgt von einem Thermostaten 19 über ein Stellorgan 20 auf ein Regelventil 21. Beim Betrieb der dargestellten Klimaanlage wird bei kühlen oder kaltem Wetter im Wärmetauscher 5 der Abluft Wärme entzogen und im Wärmetauscher 6 an die Zuluft übertragen. An heissen Sommertagen kann umgekehrt die gekühlte Abluft im Wärmetauscher 5 erwärmt werden durch Wärme, die im Wärmetauscher 6 der zu warmen Zuluft entzogen worden ist. In jedem Falle wird nun erfindungsgemäss eine Optimierung bzw. Maximierung dieses Wärmeaustausches durch Regelung der Wärmeträgermenge im Uebertragungskreislauf 7 angestrebt. Die Figuren 2 und 3 dienen der Erläuterung der massgebenden Gesichtspunkte, die bei der Optimierung oder Maximierung der Wärmerückgewinnung zu berücksichtigen sind. Figur 2 zeigt für verschiedene Parameter den Verlauf des Wirkungsgrades $\eta_{WRG}$ bzw.der rückgewonnenen thermischen Leistung N in Funktion der zwischen einem Minimum und einem Maximum variierenden Wärmeträgermenge Q im Uebetragungskreislauf 7. Der Wärmeübertragungsfaktor k in den beiden Wärmetauschern 5 und 6 ist bekanntlich abhängig von der Durchflussgeschwindigkeit des Wärmeträgers im Übertragungskreislauf 7. Figur 2 zeigt, dass dieser Wert mit zunehmender Wärmeträgermenge ansteigt. Zur Erzielung einer optimalen Wärmerückgewinnung genügt es jedoch nicht, die Umwälzgeschwindigkeit im Übertragungskreislauf 7 möglichst hoch zu wählen wie es bisher gehandhabt wurde, weil andere Faktoren ebenfalls einen wesentlichen Einfluss auf die Wärmerückgewinnung haben. Das Diagramm I in Figur 3 zeigt die Verhältnisse bei konstanter Wärmeträgermenge. Der Temperaturunterschied t1–t2 in der Abluft ist verhältnismässig gering. Die Temperaturdifferenz t6–t5 im Übertragungskreislauf ist ebenfalls relativ gering und die Erwärmung t4–t3 in der Zuluft ist auch relativ gering. Die rückgewonnene Wärme bzw. der Wirkungsgrad ist entsprechend gering.

Eine Regelung gemäss Diagramm II in Figur 3 betrifft eine Regelung der Wärmeträgermenge im Übertragungskreislauf 7 auf eine Temperatureinmittlung, eine sogenannte Δtm-Maximum-Regelung. Der Verlauf der thermischen Leistung bzw. des Wirkungsgrades bei dieser Regelung ist in Figur 2 dargestellt. Es ist ersichtlich, dass auch hier der Wirkungsgrad bzw. die rückgewonnene thermische Leistung stark von der Wärmeträgermenge im Übertragungskreislauf 7 abhängen. Durch Regelung dieser Wärmeträgermenge kann der Wert bei einem Maximum bei II gehalten werden, womit bereits höhere Wirkungsgrade erzielbar sind.

Eine noch höhere thermische Leistung bzw. ein noch höherer Wirkungsgrad ist erzielbar, wenn beide bisher besprochenen Faktoren, nämlich k und Δtm in Betracht gezogen werden, bzw. wenn eine Regelung auf maximale Leistung erfolgt. Der Verlauf des Produktes Δtm • k ist in Figur 2 dargestellt und dieser Verlauf weist ein Maximum bei III auf. Dieses Maximum entspricht auch einem Maximum an rückgewonnener thermischer Leistung. Wie das Diagramm III in Figur 3 zeigt, wird hierbei ein optimaler Wärmeaustausch, d.h. eine maximale Abkühlung der Abluft und eine maximale Erwärmung der Zuluft erzielt. Es werden dadurch maximale Wirkungsgrade erreicht.

Die tatsächliche Regelung erfolgt nun allerdings nicht nach einzelnen Werten k und Δtm, sondern direkt nach der übertragenen thermischen Leistung. Diese wird laufend erfasst durch die Messung der Temperaturdifferenz t6-t5 zwischen Vorlauf und Rücklauf des Uebertragungskreislaufes 7 und der Wärmeträgermenge Q. Das Produkt (t6-t5) • Q stellt ein Mass für die momentan übertragene thermische Leistung N dar. Dieses Produkt wird im Regler 12 dauernd gebildet, und die Regelung erfolgt in dem Sinne, dass dieses Produkt bzw. die rückgewonnene thermische Leistung auf einem Maximum gehalten wird. Zu diesem Zweck ändert der Regler periodisch die Wärmeträgermenge Q, und es wird dann ermittelt, ob diese Aenderung sich in einer Zunahme oder Abnahme der zurückgewonnen thermischen Leistung auswirke. Erfolgt eine Zunahme, so wird die Wärmeträgermenge bei der nächsten Aenderung nochmals im gleichen Sinn geändert. Erfolgte eine Abnahme der rückgewonnenen thermischen Leistung, dann wird die Wärmeträgermenge bei nächster Gelegenheit im umgekehrten Sinne geändert. In dieser Weise erfolgt eine dauernde Regelung auf maximale thermische Leistung hin. Figur 4 veranschaulicht schematisch diese Vorgänge. Die Kurve A stellt vereinfacht den Klimaverlauf, insbesondere Temperaturverlauf etwa während eines Tages mit höheren Temperaturen am Tag als in der Nacht dar. Die Kurve B veranschaulicht die Periodizität der einzelnen Regelschritte.

Diese Periodizität ist der Ansprechträgheit des Systems angepasst derart, dass das System sich zwischen den einzelnen Regelschritten voll auf die neue Wärmeträgermenge Q einregeln kann, d.h., dass mindestens eindeutig feststellbar ist, in welchem Sinne sich die letzte Aenderung der Wärmeträgermenge auf die rückgewonnene thermische Leistung ausgewirkt hat. In Figur 4 ist gezeigt, dass eine anfängliche Wärmeträgermenge Q bei einer bestimmten rückgewonnen thermischen Leistung N beim ersten dargestellten Regelschritt willkürlich herabgesetzt wird. Wie angedeutet wirkt sich diese Herabsetzung der Wärmeträgermenge Q in einem Absinken der rückgewonnenen thermische Leistung N aus. Der Regler 12 wertet diese Information in dem Sinne aus, dass die erfolgte Aenderung der Wärmeträgermenge Q im falschen Sinne erfolgt war und diese Aenderung wird nun beim nächsten Regelschritt rückgängig gemacht. In Fig. 4 ist nun angenommen, dass dadurch die rückgewonnene thermische Leistung wieder ansteige, was die Richtigkeit des vorangegangenen Regelvorganges bestätigt, so dass bei nächster Gelegenheit die Wärmeträgermenge Q weiter erhöht wird. In diesem Sinne erfolgt eine dauernde Regelung, die natürlich in Realität feiner und genauer ausfällt als in Fig. 4 schematisch dargestellt.

Bei einer Regelung der Wärmeträgermenge Q in einem Bereiche von beispielsweise 1:6 lässt sich, wie eingehende Berechnungen ergeben haben, eine Steigerung der rückgewonnenen Energie um rund 25% gegenüber herkömmlichen Anlagen erzielen. Zugleich können die Betriebskosten gesenkt werden, indem insgesamt weniger Pumpenergie verbraucht wird. Wie Figur 2 zeigt, steigt der Druckverlust bzw. die Pumpenergie mit zunehmender Wärmeträgermenge progressiv an, d.h. ein häufiger Betrieb mit reduzierter Wärmeträgermenge gestattet die Pumpleistung erheblich zu senken. Dies ist vorallem der Fall, wenn nicht gemäss Fig. 1 ein Regelventil 9 verwendet wird, sondern eine Pumpe mit variabler Drehzahl und Förderleistung.

Die Regelung kann durch weitere Parameter beeinflusst werden. Es ist insbesondere eine Begrenzung des Regelbereiches mit Hilfe des Frostschutzthermostaten 16 möglich. Unter bestimmten Voraussetzungen könnte also dieser Thermostat nicht nur dazu dienen, den Vorwärmer 17 einzuschalten, sondern er könnte direkt auch auf die Regelung der Wärmeträgermenge einwirken. Hierbei wäre eine Begrenzung des Regelbereiches in dem Sinne möglich, dass bei extremen Verhältnissen nicht mehr auf optimale bzw. maximale Wärmerückgewinnung, sondern nach anderen Gesichtspunkten, insbesondere zur Vermeidung von Reif- oder Eisbildung geregelt wird. Es könnte zusätzlich eine Temperaturmessung im Zuluftkanal erfolgen, gestützt auf welche unter Umständen die übliche Tastregelung abgeändert wird. Erfolgt beispielsweise ein rascher Temperatursturz wie er etwa durch ein Gewitter verursacht wird, kann eine Aenderung der Wärmeträgermenge Q in einer ganz bestimmten Richtung gesteuert werden. Dabei können im Regler 12 Daten gespeichert sein, die für die Anlage spezifisch sind und gemäss welchen bei gegebenen klimatischen Verhältnissen in die oben beschriebene Tastregelung eingegriffen wird bzw. die Regelung nach diesen Daten erfolgt. Während beim beschriebenen Ausführungsbeispiel beidseitig Luft als Medium angenommen ist, können irgendwelche andere Medien, z.B. Abwasser bzw. Frischwasser gekühlt und erwärmt werden, oder es können verschiedenartige Medien sein. Eine entsprechende Leistungsmaximierung kann auch bei anderen Wärmeübertragungen mit zwei Wärmetauschern, beispielsweise bei einer Solaranlage mit Wärmetauscher im Kollektor und in einem Boiler zur Anwendung kommen.

**Patentansprüche**

1. Verfahren zur Wärmerückgewinnung aus dem wärmeren (4) von zwei getrennt geführten Medienströmen (1, 4), wobei über einen ersten Wärmetauscher (5) im wärmeren Medienstrom, einen Wärmeträger in einem Übertragungskreislauf (7) und einen zweiten Wärmetauscher (6) im kühleren Medienstrom (1) Wärme rückgewonnen wird, wobei der Übertragungskreislauf (7) beide Wärmetauscher (5, 6) umfasst, dadurch gekennzeichnet, dass im Übertragungskreislauf (7) die zurückgewonnene thermische Leistung ($\Delta t \cdot Q$) laufend erfasst und eine Regelung der Wärmeträgermenge (Q) in diesem Kreislauf (7) auf maximale thermische Leistung vorgenommen wird.

2. Verfahren nach Anspruch 1, dadurch gekennzeichnet, dass im Übertragungskreislauf (7) die Temperaturdifferenz ($t_6-t_5$) zwischen Vor- und Rücklauf sowie die Wärmeträgermenge (Q) erfasst und daraus die thermische Leistung (N) berechnet wird.

3. Verfahren nach Anspruch 1 oder 2, dadurch gekennzeichnet, dass periodisch die Wärmeträgermenge (Q) willkürlich schrittweise erhöht oder vermindert wird, und dass aus dem Einfluss auf die thermische Leistung (N) geschlossen wird, in welcher Richtung die nächste Veränderung der Wärmeträgermenge (Q) erfolgen soll.

4. Verfahren nach einem der Ansprüche 1 bis 3, dadurch gekennzeichnet, dass zur Regelung weitere Parameter, z.B. die Temperatur des aus dem ersten Wärmetauscher (5) austretenden Medienstroms (4), herangezogen werden.

5. Verfahren nach Anspruch 4, dadurch gekennzeichnet, dass bei Bereifungsgefahr im ersten Wärmetauscher (5) die in den zweiten Wärmetauscher (6) eintretende Luft (1) vorgewärmt oder aber der Regelbereich begrenzt wird.

6. Anlage zur Wärmerückgewinnung gemäss dem Verfahren nach Anspruch 1, gekennzeichnet durch einen Regler (12), der auf ein Element (9, 15) zur Regelung der Wärmeträgermenge (Q) wirkt, und durch Messfühler (10, 11, 13) zur Übermittlung von Messwerten betreffend die thermische Leistung ($\Delta t \cdot Q$) an den Regler.

7. Anlage nach Anspruch 6, dadurch gekennzeichnet, dass als Element zur Regelung der Wärmeträgermenge ein Regelventil (9, 15) oder eine Pumpe (8) mit regelbarer Drehzahl vorgesehen ist.

8. Anlage nach Anspruch 6 oder 7, dadurch gekennzeichnet, dass der Regler (12) Mittel zur periodischen, schrittweisen Erhöhung oder Herabsetzung der Wärmeträgermenge (Q) aufweist, wobei die Mengenänderung in der Richtung gesteuert wird, die bei der vorhergehenden Mengenänderung eine Optimierung der Wärmerückgewinnung bewirkt hat bzw. hätte.

9. Anlage nach einem der Ansprüche 6 bis 8, dadurch gekennzeichnet, dass im Regler (12) Daten gespeichert sind, gemäss welchen bei gegebenen klimatischen Verhältnissen die Regelung erfolgt.

**Claims**

1. Method for heat recovery from the warmer (4) of two separately conducted streams of a fluid (1, 4), whereby heat is recovered through a first heat exchanger (5) in the warmer stream of medium, a heat transfer medium in a transmitting circuit (7) and a second heat exchanger (6) in the cooler stream of fluid (1), whereby the transmitting circuit (7) includes both heat exchangers (5, 6), characterized in that the recovered thermic output ($\Delta t \cdot Q$) is continuously detected and a regulation of the quantity (Q) of heat transfer medium in this circuit (7) to maximum thermic output is effected.

2. Method according to claim 1, characterized in that the temperature difference ($t_6-t_5$) between the feed line and the return line in the transmitting circuit (7) as well as the quantity (Q) of heat transfer medium is detected and the thermic output (N) is calculated therefrom.

3. Method according to claim 1 or 2, characterized in that the quantity (Q) of heat transfer medium is periodically optionally increased or reduced stepwise and that from the influence onto the termic output (N) it is determined in which direction the next change of the quantity of heat transfer medium (Q) has to be made.

4. Method according to one of claims 1 to 3, characterized in that for regulation further parameters, for instance the temperature of the stream of medium (4) leaving the first heat exchanger (5), are considered.

5. Method according to claim 4, characterized in that at danger of formation of frost in the first heat exchanger (5), the air (1) entering into the second heat exchanger (6) is preheated, or else the regulating range is limited.

6. Installation for heat recovery according to the method according to claim 1, characterized by a controller (12) acting onto an element (9, 15) for regulation of the quantity of heat transfer medium (Q) and by measuring feelers (10, 11, 13) for transmission of measuring values concerning the thermic output ($\Delta t \cdot Q$) to the controller.

7. Installation according to claim 6, characterized in that a control valve (9, 15) or a pump (8) with adjustable speed is provided as an element for regulating the quantity of heat transfer medium.

8. Installation according to claim 6 or 7, characterized in that the controller (12) comprises means for periodical stepwise increase or reduction of the quantity (Q) of heat transfer medium, whereby the change of quantity is controlled in the direction which has caused or would have caused an optimization of the heat recovery at the previous change of quantity.

9. Installation according to one of claims 6 to 8, characterized in that dates are memorized in the controller (12) according to which the regulation is effected at determined climatic conditions.

**Revendications**

1. Procédé de récupération de chaleur à partir du plus chaud (4) de deux écoulements d'un fluide (1, 4), de la chaleur étant récupérée par l'intermédiaire d'un premier échangeur de chaleur (5) dans l'écoulement de fluide le plus chaud, d'un caloporteur dans un circuit de transfert (7) et d'un deuxième échangeur de chaleur (6) dans l'écoulement de fluide le plus froid, le circuit de transfert (7) comprenant les deux échangeurs de chaleur (5, 6), caractérisé en ce que dans le circuit de transfert (7) la puissance thermique ($\Delta t \cdot Q$) récupérée est constamment saisie et qu'une régulation de la quantité de caloporteur (Q) dans ce circuit (7) pour une énergie thermique maxima est effectuée.

2. Procédé selon la revendication 1, caractérisé en ce que dans le circuit de transfert (7) la différence de température ($t_6$–$t_5$) entre l'allée et le retour ainsi que la quantité de caloporteur (Q) sont saisies et qu'à partir de ces informations la puissance thermique (N) est calculée.

3. Procédé selon la revendication 1 ou 2, caractérisé en ce que la quantité de caloporteur (Q) est arbitrairement augmentée ou diminuée périodiquement par étapes et que la direction dans laquelle la prochaine variation du caloporteur (Q) doit avoir lieu est déduite de l'influence excercée sur la puissance thermique (N).

4. Procédé selon l'une des revendications 1 à 3, caractérisé en ce que d'autres paramètres sont considérés pour la régulation, par exemple la température de l'écoulement de fluide (4) sortant du premier échangeur de chaleur (5).

5. Procédé selon la revendication 4, caractérisé en ce que lors d'un danger de formation de givre dans le premier échangeur de chaleur (5), l'air (1) entrant dans le second échangeur de chaleur (6) est préchauffé ou alors le domaine de régulation est limité.

6. Installation de récupération de chaleur selon le procédé de la revendication 1, caractérisée par un régulateur (12) qui agit sur un élément (9, 15) en vue de la régulation de la quantité de caloporteur (Q), et par des capteurs (10, 11, 13) en vue de la transmission de valeurs mesurées concernant la puissance thermique ($\Delta t \cdot Q$) au régulateur.

7. Installation selon la revendication 6, caractérisée en ce qu'une soupape de réglage (9, 15) ou une pompe (8) à nombre de tours réglable est prévue en tant qu'élément pour la régularisation de la quantité de caloporteur.

8. Installation selon la revendication 6 ou 7, caractérisée en ce que le régulateur (12) comporte des moyens pour l'augmentation ou la diminution, par étapes et périodiquement, de la quantité de caloporteur (Q), la variation de quantité étant commandée dans la direction qui a provoqué ou aurait provoqué une optimisation de la récupération de chaleur lors de la variation de quantité précédente.

9. Installation selon l'une des revendications 6 à 8, caractérisée en ce que des informations sont mémorisées dans le régulateur (12), selon lesquelles est effectuée la régulation pour des conditions climatiquées données.

FIG. 1

FIG.2

FIG.3

FIG.4